# EUROPEAN PATENT APPLICATION

(11) **EP 4 512 658 A1**
(43) Date of publication of application: **26.02.2025**
(21) Application number: 24185351.4
(22) Date of filing: 28.06.2024
(51) Int. Cl.: B60N 3/00

(54) **TABLE STRUCTURE FOR TRANSPORT**

(30) Priority: 27.07.2023 JP 2023122609
(71) Applicant: Suzuki Motor Corporation, Shizuoka 432-8611 (JP)
(72) Inventor: TAKEO, Hisayuki, HAMAMATSU-SHI, 432-8611 (FR); BUZOJIMA, Hiroki, HAMAMATSU-SHI, 432-8611 (JP)
(74) Representative: Plasseraud IP

(57) **Abstract**

[Problem to be Solved] To enable an article to be easily hooked at a table for a transport.

[Solution] A table structure for a transport includes a table 1 that is rotatably supported by a fixation member of a transport. The table 1 includes a plurality of side surfaces including first side surfaces 4a and a second side surface 4b, corner portions are formed by the first side surfaces 4a and the second side surface 4b, and the corner portions include projecting portions 15 that project from the second side surface 4b in a longitudinal direction of the first side surfaces 4a.

## Description

### [Technical Field]

The present invention relates to a table for a transport.

### [Background Art]

Some fixation members that are mounted in transports such as automobiles, aircraft, watercraft, and trains include tables attached thereto. Here, the fixation members are members by which the tables are rotatably supported and include, for example, seats disposed in interiors of vehicles.

For example, a structure in which a foldably (rotatably) provided table is provided on a rear surface of a seat back of a seat (fixation member) disposed in an interior of a vehicle as disclosed in Patent Literature 1 is known. In the table structure, a support shaft is provided at an upper edge portion of a table main body, and the table main body is configured to turn around the support shaft.

A hook at which an accommodating bag with a handle, for example, can be hooked is formed inside a notch portion formed at a side end portion of the table main body in this example. The hook in this example faces the inside of the notch portion and projects toward a side on which the support shaft are provided (the upper side of a stored position in this example) in a longitudinal direction of a side edge portion of the table. A gap is formed between the hook and the side edge portion (the bottom of the notch portion) inside the notch portion.

Furthermore, a wall surface in which the notch portion is formed is provided in the hook projecting direction, and a distal end of the hook and the wall surface are disposed at an interval in the hook projecting direction. The interval serves as an inlet of the handle, for example. Furthermore, a projection that projects toward the center side of the table is formed at the distal end portion of the hook. In a case in which the accommodating bag with a handle, for example, is hooked at the hook, the handle is inserted from the inlet, and the handle moves in the gap between the hook and the table side edge portion. At this time, the hook is provided with the projection to thereby enable a state in which the handle is hooked at the hook to be maintained with the handle in the gap hooked at the projecting portion.

### [Citation List]

### [Patent Literature]

[Patent Literature 1] JP 2015-199400 A

### [Summary of Invention]

### [Problems to be Solved by the Invention]

In addition, since the dimension in the projecting direction near the inlet is limited in the structure including the notch portion and the hook as in the above example, it is difficult to cause the handle to move deep in the gap in a case in which a thick handle is included, for example. When the table main body is at a stored position, in particular, the hook projecting direction is the up-down direction. Therefore, in a case in which the weight of baggage is heavy, it is necessary to cause the handle to move toward the inlet and to insert the handle into the inlet in a state in which the baggage is lifted with the handle. Therefore, there is room for improvement in the structure in the above example in terms of ease of hooking the handle of the accommodating bag, for example, at the hook.

The present invention was made in order to solve the above problem, and an object thereof is to provide a table structure for a transport that enables an article to be easily hooked at a table.

### [Means for Solving the Problems]

A table structure for a transport according to the present invention to achieve the above object includes a table that is rotatably supported by a fixation member of the transportation. In the table structure for a transport, the table includes a plurality of side surfaces including first side surfaces and a second side surface, corner portions are formed by the first side surfaces and the second side surface, and the corner portions include projecting portions that project from the second side surface in a longitudinal direction of the first side surfaces.

### [Advantageous Effect of Invention]

According to the table structure for a transport of the present invention, it is possible to easily hook an article at a table.

### [Brief Description of Drawings]

[Figure 1] Figure 1 is a front view illustrating an embodiment of a table structure for a transport according to the present invention and illustrating a state in which a table main body is in a stored state.
[Figure 2] Figure 2 is a rear view illustrating a rear surface of a table in Figure 1.
[Figure 3] Figure 3 is an enlarged front view illustrating a corner portion in Figure 1 in an enlarged view.
[Figure 4] Figure 4 is a perspective view of Figure 3.
[Figure 5] Figure 5 is a perspective view illustrating a first modification of the embodiment in Figure 1.
[Figure 6] Figure 6 is a perspective view illustrating a second modification of the embodiment in Figure 1.
[Figure 7] Figure 7 is a perspective view illustrating a third modification of the embodiment in Figure 1.
[Figure 8] Figure 8 is a rear view of a projecting portion and the like in Figure 7 in a deployed state seen from the rear side.
[Figure 9] Figure 9 is a perspective view illustrating a fourth modification of the embodiment in Figure 1.
[Figure 10] Figure 10 is a rear view of the projecting portion and the like in Figure 9 in the deployed state seen from the rear side.
[Figure 11] Figure 11 is a partial front view illustrating a fifth modification of the embodiment in Figure 1 in the stored state seen from the rear side.
[Figure 12] Figure 12 is a side view of Figure 11.
[Figure 13] Figure 13 is a perspective view illustrating a sixth modification of the embodiment in Figure 1.
[Figure 14] Figure 14 is a front view of Figure 13.
[Figure 15] Figure 15 is a side view of Figure 14.
[Figure 16] Figure 16 is a perspective view illustrating a seventh modification of the embodiment in Figure 1.
[Figure 17] Figure 17 is a front view of Figure 16.
[Figure 18] Figure 18 is a side view of Figure 17.
[Figure 19] Figure 19 is a perspective view illustrating an eighth modification of the embodiment in Figure 1.
[Figure 20] Figure 20 is a front view of Figure 19.
[Figure 21] Figure 21 is a side view seen in the direction of the arrow F in Figure 20.
[Figure 22] Figure 22 is a perspective view illustrating a ninth modification of the embodiment in Figure 1.
[Figure 23] Figure 23 is a front view of Figure 22.

### [Mode for Carrying Out the Invention]

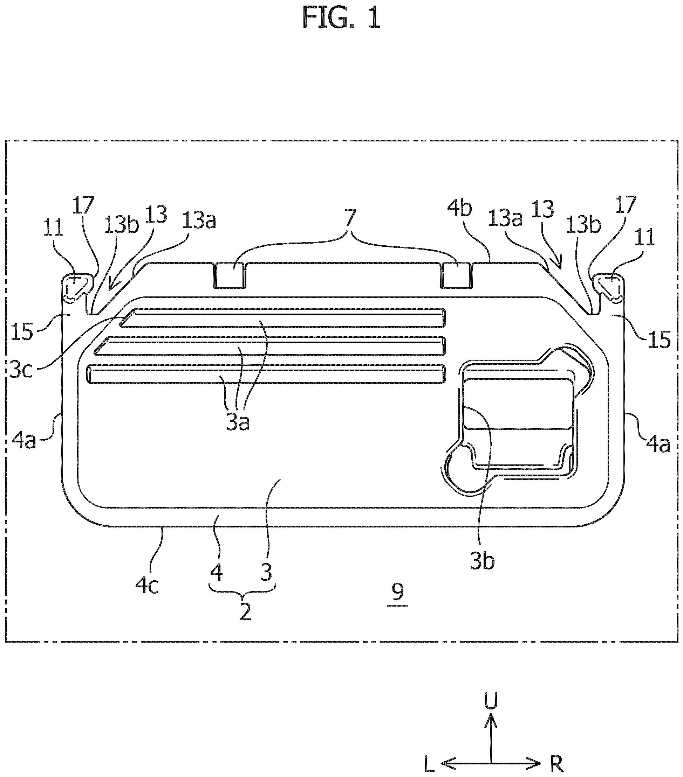

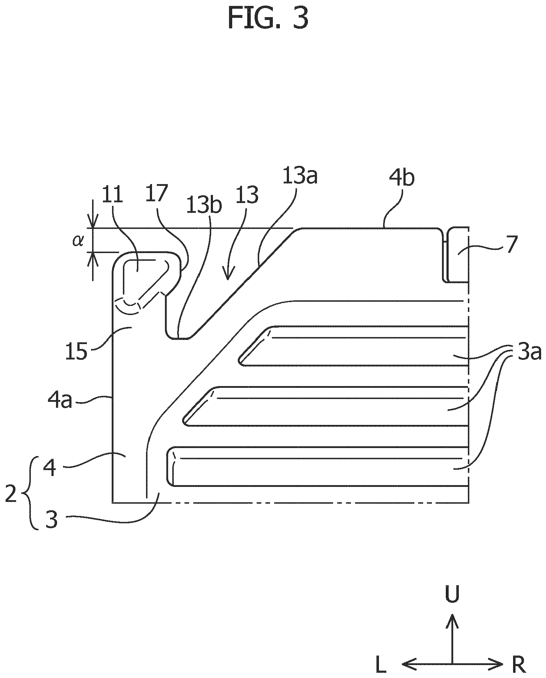

Hereinafter, an embodiment of a table structure for a transport according to the present invention will be described with reference to the drawings (Figures 1 to 4). Here, the present embodiment will be described by exemplifying a table 1 to be attached to a rear surface 9 of a seat back of a seat mounted in a vehicle as a table for a transport.

Note that the arrow Fr direction in the drawings represents a front side in a vehicle front-rear direction in the present embodiment. A "front portion (front end) and a rear portion (rear end)" in the description of the embodiment correspond to a front portion and a rear portion in the front-rear direction of the vehicle. Furthermore, the arrow R and the arrow L indicate the right side and the left side when a passenger views the vehicle front side and indicate a vehicle width direction. Here, a fact that the passenger views the vehicle front side corresponds to a fact that a passenger seated in a rear seat views a rear surface 9 of a seat back of a driver's seat. Furthermore, the vehicle width direction corresponds to a seat width direction and a table width direction. Furthermore, the arrow U indicates a vehicle upper side. Here, a table 1 upper end, which will be described later, in a stored state corresponds to an upper end in a vehicle up-down direction.

The table structure for a transport according to the present embodiment includes the table 1 that is rotatably supported by the fixation member of the transport, and the table 1 in the table structure for a transport includes a plurality of side surfaces including first side surfaces and a second side surface (outer surfaces 4a and an upper surface 4b, for example), corner portions are formed by the first side surfaces and the second side surface, and the corner portions include projecting portions 15 that project from the second side surface in a longitudinal direction of the first side surfaces.

In the present embodiment, the transport is assumed to be a vehicle (automobile), and the fixation member of the transport is assumed to be a seat disposed in an interior of the vehicle. The table 1 is attached to the rear surface 9 of the seat back of the seat (Figure 1). The table 1 has a substantially rectangular plate shape extending in the vehicle width direction and is formed of a resin material. Furthermore, a part corresponding to one long side of the rectangular shape is rotatably supported by the rear surface 9 of the seat back in the present embodiment.

The table 1 has a deployed state in which the main surface 2 faces upward and a stored state in which the main surface 2 faces a lateral direction, and the table 1 is turned upward from the stored state and is brought into the deployed state. The table 1 in the present embodiment can be brought into the two states (modes), that is, the deployed state and the stored state. The deployed state is a state for utilization as the table 1, and the table 1 is disposed to project on the vehicle rear side from the rear surface 9 of the seat back. In the deployed state, an article can be placed on the main surface 2, and office work, for example, can be performed on the main surface 2. On the other hand, the main surface 2 is disposed in a state of vertical placement such that the main surface 2 faces the vehicle rear side in the stored state. In this state, no articles are placed on the main surface 2.

Although turning shafts 7 of the table 1 are not displaced in the present embodiment, the table 1 may be displaced in the horizontal direction using a second turning shaft that is different from the turning shafts 7 and a link mechanism, for example. In this case, the table 1 may be turned downward and changed from the stored state to the deployed state. Furthermore, it is also possible to turn the table 1 upward and to cause the table 1 to be changed from the stored state to the deployed state.

Here, the table 1 includes a plurality of side surfaces as described above. The side surfaces are wall surfaces that are adjacent to the table edge portions 4 and include an upper surface 4b, left and right outer surfaces 4a, and a lower surface 4c. Here, the upper surface 4b is a side surface facing the vehicle upper side when the table 1 is in the stored state, and the lower surface 4c is a side surface facing the vehicle lower side in the stored state. Note that in the deployed state, the upper surface 4b is a side surface located on the side of the turning shafts and facing the vehicle front side, the left and right outer surfaces 4a are side surfaces located on both sides of the table 1 in the turning shaft direction of the table 1, and the lower surface 4c is a side surface located on the side opposite to the turning shafts and facing the vehicle rear side.

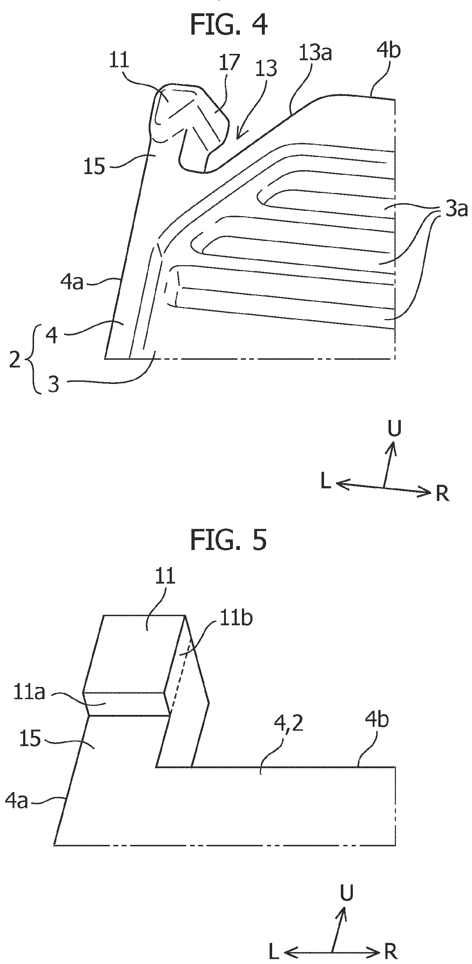

The table edge portions 4 at the outer periphery of the main surface 2 of the table 1 project with respect to the center of the main surface 2. Note that Figure 4 illustrates a state in which the table edge portions 4 project backward from the main surface 2 in the stored state. In the deployed state, the table edge portions 4 project upward with respect to the center of the main surface 2. The inside of the table edge portions 4 serves as the placement surface 3 of the table 1 on which an article can be placed. The table edge portions 4 reduce dropping of the articles on the placement surface 3 from the table 1 in the deployed state. Furthermore, the placement surface 3 is provided with groove portions 3a extending in the table width direction. The groove portions 3a are provided to position an information terminal such as a smartphone, for example, when the information terminal is caused to lean up against the seat back on the placement surface 3 and to reduce dropping of an article with a long length such as a writing tool, for example, from the placement surface 3. The groove portions 3a with long lengths function as beads in this manner and improve rigidity of the table 1. Additionally, the placement surface 3 is provided with an opening 3b in which a cup holder (not illustrated), for example, can be placed. The cup holder is provided on the back side of the placement surface 3.

The shape of the table 1 will be described. The table 1 in the present embodiment includes dented portions 13 and projecting portions 15. Hereinafter, each component will be described.

The dented portions 13 and the projecting portions 15 are provided at corners on both sides of the upper surface 4b of the table in the stored state. In this example, the dented portions 13 are formed at side portions configuring the periphery of the table 1 and are formed to be recessed toward inside of the main surface 2 in a direction in which the main surface 2 spreads. The dented portions 13 in the present embodiment are provided at corners (corner portions) on both left and right sides of the end portions where the turning shafts 7 are provided, and parts of the upper surface 4b of the table 1 in the stored state (outer portions in the table width direction) are recessed downward, as illustrated in Figure 1. In this example, the left and right dented portions 13 are formed to be horizontally symmetrical.

The dented portions 13 are provided with inclined portions 13a. The inclined portions 13a are provided on the upper surface 4b where the dented portions 13 are formed, and are inclined outward from the center portion of the upper surface 4b in the table width direction. In the present embodiment, the inclined portion 13a provided at the dented portion 13 on the left side is inclined downward as it approaches the left side when the table 1 is in the stored state, for example. The upper portions of the inclined portions 13a correspond to edges of the dented portions 13 and are connected to the upper surfaces 4b of the table 1. Lower portions of the inclined portions 13a are connected to bottoms 13b of the dented portions 13. In this example, the upper surface 4b includes the inclined portions 13a and the bottoms 13b.

Since the volume inside the dented portions 13 is enlarged by providing the inclined portions 13a, a configuration with which it is possible to easily hook the handle or the like at the dented portions 13 is achieved. Furthermore, the handle moves along the inclined portions 13a and is then engaged with the bottoms 13b of the dented portions 13, and it is thus possible to stably support the accommodating bag or the like with a handle. The dented portions 13 are narrowed as it approaches the bottoms 13b, and the handle is thus sandwiched at the bottoms 13b of the dented portions 13 and is stably supported.

The projecting portions 15 are provided at the corner portions on the upper side of the table 1 in the stored state and project from the upper surface 4b (second side surface) in the longitudinal direction of the left and right outer surfaces 4a (first side surfaces). The projecting portions 15 in this example project upward from the bottoms 13b of the dented portions 13 formed by the upper surface 4b being dented. In this example, the inner surfaces of the projecting portions 15 in the seat width direction configure inner walls of the dented portions 13. The inner surfaces of the projecting portions 15 and the bottoms 13b of the dented portions 13 are smoothly connected in R shapes.

It is possible to reduce contact of the handle with the edge portions 4 other than the projecting portions 15 when the handle is hooked on the side of the distal end portions of the projecting portions 15 from the outside of the edge portions 4, by providing the projecting portions 15 to allow the handle to be hooked as described above. Therefore, it is easy to hook the handle at the projecting portions 15 in the table structure. Furthermore, it becomes easy to receive a load acting on the projecting portions 15 by the entire side surfaces (outer surfaces 4a) of the edge portions 4 in the projecting direction (the upper side in this case) of the projecting portions 15, and it becomes possible to reduce oscillation and deformation of the table 1 in the periphery of the projecting portions 15 even if the baggage is heavy.

Furthermore, the side surfaces of the projecting portions 15 are preferably formed to be continuous with the first side surfaces. In the present embodiment, the side surfaces of the projecting portions 15 on the outer sides in the sheet width direction are formed continuously from the outer surfaces 4a of the table 1 and linearly extend as illustrated in Figures 1 to 4. With such a configuration, it becomes easy to transmit a load acting on the projecting portions 15 to predetermined side surfaces (the outer surfaces 4a in this example) from the side surfaces of the projecting portions 15, it thus becomes easy to receive the load by the entire region of the predetermined side surfaces (outer surfaces 4a) of the table edge portions 4, and it becomes possible to reduce oscillation and deformation of the table 1 in the periphery of the projecting portions 15 even if the baggage is heavy.

Furthermore, the projecting portions 15 preferably include, between the distal end portions and the proximal end portions that are close to the second side surface (corresponding to the side of the bottoms 13b of the dented portions 13 in this example), expanding portions 17 that expand in the direction intersecting the longitudinal direction of the projecting portions 15. In the present embodiment, the expanding portions 17 expand inward in the seat width direction near the distal end portions of the projecting portions 15 on the inner surfaces of the projecting portions 15 in the seat width direction.

Furthermore, the distal end portions of the projecting portions 15 are provided with protruding portions 11. The protruding portions 11 project backward from the upper portions of the projecting portions 15 in the stored state. When the table 1 in the stored state the rear surface 9 of the seat back is seen from behind, the protruding portions 11 are triangular prisms having a substantially triangular shape and projecting backward.

It is possible to reduce detachment of baggage (articles) such as accommodating bags with handles, for example, hooked at the protruding portions 11 from the table 1 when the table 1 in a state in which the articles are suspended therefrom is caused to rotate, by providing the protruding portions 11. Furthermore, since the protruding portions 11 are provided at the table edge portions 4 located at edges of the main surface 2, it becomes easy to form a horizontal surface on the center side of the table 1, and it is easy to place the baggage on the table 1. Since the projecting portions 15 are disposed outward in the table width direction and the projecting portions 15 are provided with the protruding portions 11, it is possible to make it easy to hook the handle at the protruding portions 11.

Furthermore, the inner surfaces of the protruding portions 11 in the table width direction are provided with the expanding portions 17. The expanding portions 17 preferably include inclined surfaces that are inclined in the inclination direction of the inclined portions 13a. In the present embodiment, the expanding portions 17 expand toward the dented portions 13 from the side surfaces of the protruding portions 11 facing the dented portions 13 and the side surfaces of the projecting portions 15 facing the dented portions 13 in the stored state.

In the present embodiment, the expanding portions 17 expand toward the dented portions 13 and extend in the front-rear direction of the seat (the thickness direction of the table 1) in the stored state. Inner ends of the expanding portions 17 in the table width direction are disposed further inward than the outer ends of the bottoms 13b of the dented portions 13 in the table width direction. Furthermore, the lower ends of the expanding portions 17 in the stored state are inclined toward the outer side of the expanding portions 17 in the table width direction as the lower ends approaches the lower side from the inner ends of the expanding portions 17 in the table width direction. The inclination direction is preferably caused to correspond to the inclination direction of the inclined portions 13a of the dented portions 13. In the stored state, the side surfaces of the projecting portions 15 located below the expanding portion 17 and facing the dented portions 13 extend in the up-down direction.

Since the expanding portions 17 are located in the direction in which the handle is detached (on the side of the distal ends of the projecting portions 15) when the handle is hooked at the distal end portions of the projecting portions 15 located at the bottoms 13b of the dented portions 13, it is possible to make the handle unlikely to detached from the projecting portions 15 by providing the expanding portions 17 as described above. The expanding portions 17 can prevent the handle from moving even if the handle horizontally moves toward the distal ends of the projecting portions 15 when the table 1 is in the deployed state.

As described above, the width of upper openings of the dented portions 13 becomes slightly narrow in the stored state by providing the expanding portions 17, and it becomes difficult to hook the handle at the dented portions 13, whereas it becomes easy to maintain (adjust) the interval between the expanding portions 17 and the inclined portions 13a at an appropriate width in the table width direction. Therefore, it is possible to smoothly guide the handle up to the bottoms 13b of the dented portions 13 in the inclination direction of the lower ends of the expanding portions 17 and the inclination direction of the inclined portions 13a. Therefore, it is possible to achieve a configuration that easily balances between how easy the handle can be hooked and how unlikely the handle is to detached.

Furthermore, the dented portions 13 that dented toward the inside of the plane of the table 1 (toward the lower side in the stored state) are formed in the upper surface 4b (second side surface), and the projecting portions 15 configure the inner walls (side wall surfaces) of the dented portions 13 in the present embodiment as described above. In this manner, it is possible to deepen the projecting portions 15 on the proximal end side by the amount of dent of the dented portions 13 in the projecting direction of the projecting portions 15 by configuring the dented portions 13 and the projecting portions 15 and to thereby obtain a configuration with which the handle is unlikely to detached from the projecting portions 15. Moreover, the handle at the side surface (upper surface 4b) that is adjacent to the edge portions 4 of the table 1 becomes unlikely to come into contact by the amount of dent of the dented portions 13 in the direction intersecting (perpendicularly intersecting) the projecting direction of the projecting portions 15, and it becomes possible to make it easy to hook the handle at the projecting portions 15.

With the configuration as described above, it is possible to easily hook an article at the table 1.

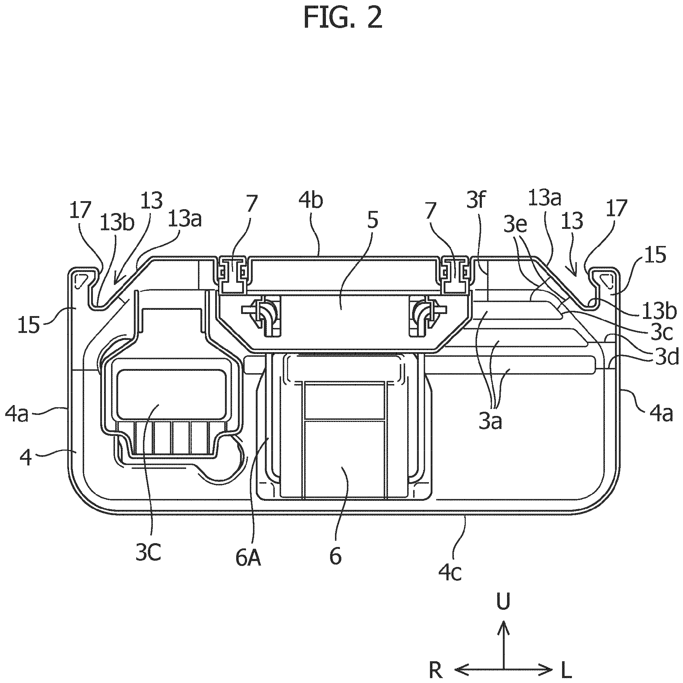

Furthermore, the groove portions 3a extending in the left-right direction are formed as described above in the placement surface 3 in the above embodiment. The groove portions 3a project from the back surface and extend in the table width direction on the side of the back surface of the placement surface 3. As illustrated in Figure 2, left and right end surfaces of the groove portions 3a are coupled with first ribs 3d provided on the inner side of the projecting portions 15 on the back surface of the placement surface 3. The first ribs 3d extend in the table width direction, and the outer sides of the first ribs 3d are connected to the projecting portions 15 or the outer surface 4a. It is possible to transmit a load of baggage or the like transmitted to the projecting portions 15 from the left and right end surfaces of the groove portions 3a to the groove portions 3a via the first ribs 3d and to enhance rigidity of the left and right end surfaces by providing the first ribs 3d. As a result, it is possible to stably support the baggage. Furthermore, it is also possible to reduce oscillation and deformation of the table 1 by providing the first ribs 3d.

Additionally, wall surfaces configuring the dented portions 13 and the groove portions 3a are coupled with second ribs 3e on the back side of the placement surface 3. Here, the outer sides of the second ribs 3e are connected to the inclined portions 13a of the dented portions 13, and the inner sides of the second ribs 3e are connected to the end surfaces or the side portions of the groove portions 3a. Here, the second ribs 3e preferably extend to perpendicularly intersect the inclination direction of the inclined portions 13a of the dented portions 13. It is possible to transmit a load of baggage or the like transmitted to the dented portions 13 to the groove portions 3a via the inclined portions 13a of the dented portions 13 and the second ribs 3e and further to enhance rigidity of the dented portions 13 by providing the second ribs 3e. As a result, it is possible to stably support the baggage, and it is also possible to reduce oscillation and deformation of the table 1. Furthermore, third ribs 3f connecting the upper surface 4b and the side portions of the groove portions 3a may be provided to secure rigidity.

In the present embodiment, the left and right end portions 3c of the groove portions 3a are inclined substantially in parallel to the inclined direction of the inclined portions 13a of the dented portions 13 as illustrated in Figure 2. As illustrated in Figure 2, one of the second ribs 3e connects the inclined end portion 3c of the groove portions 3a and the inclined portion 13a and perpendicularly intersects the inclination direction of the inclined portion 13a and the like. It is possible to improve rigidity at the periphery of the end portions 3c of the groove portions 3a and to receive the load transmitted to the inclined portions 13a on the side of the groove portions 3a via the second ribs 3e by providing the second ribs 3e in this manner.

Furthermore, in the table 1 according to the present embodiment, the end surface (the upper surface 4b) of the table edge portion 4 on the side of the turning shafts 7 is the surface that is adjacent to the rear surface 9 (fixation member) of the seat back, the upper surface 4b is rotatably supported at a predetermined gap with respect to the rear surface 9 (fixation member) of the seat back, and the projecting portions 15 are disposed on the side further inward than the upper surface 4b serving as an adjacent surface such that the distal ends of the projecting portions 15 in the projecting direction are on the extension line of the axis of the turning shafts 7. It is possible to enable the handle to be hooked at the projecting portions 15 from the gap between the distal ends of the projecting portions 15 and the rear surface 9 (fixation member) of the seat back while reducing contact of a passenger with the projecting portions 15 by causing the projecting portions 15 to project on the side of the turning shafts 7.

The description of the present embodiment is an indication of an example for describing the present invention and is not intended to limit the invention stated in the claims. Furthermore, the configurations of the respective portions of the present invention are not limited to those of the above embodiment, and various alterations can be made within the technical scope of the claims.

Although the above embodiment has been described on the assumption that the transport is a vehicle (automobile), the present invention is not limited thereto. For example, the transport may be a train, a watercraft, an aircraft, or the like. Furthermore, although the fixation member is assumed to be a seat disposed in the interior of the vehicle in the above embodiment, the present invention is not limited thereto. For example, the fixation member may be a table provided on a wall surface (side trim) in the interior of the vehicle. Furthermore, the fixation member may be any article disposed in a passenger room of a transport other than the vehicle. Furthermore, the fixation member may be a wall portion provided outside the transport. Although the table edge portions 4 project from the placement surface 3 in the above embodiment, the present invention is not limited thereto, and the table edge portions 4 may be provided on the same plane as the placement surface 3.

Although the projecting portions 15 project upward in the direction in which the outer surfaces 4a extend from the upper surface 4b in the stored state in the above embodiment, the present invention is not limited thereto. For example, the projecting portions 15 may project outward from the outer surfaces 4a in the direction (seat width direction) in which the upper surface 4b extends. In this case, the projecting portions may project outward from the upper portions of the outer surfaces 4a or may project outward from the lower portions of the outer surfaces 4a. Furthermore, the projecting portions may project outward from intermediate portions of the outer surfaces 4a in the up-down direction. Moreover, the projecting portions can also be configured to project outward from parts sticking out downward from the lower surface 4c in the stored state.

Although the turning shafts 7 are provided along the upper surface 4b, the present invention is not limited thereto. The turning shafts 7 may be provided to be adjacent to the lower surface 4c.

First to ninth modifications of the above embodiment will be described with reference to Figures 5 to 24.

### (First modification)

First, the first modification will be described. In the first modification, the dented portions 13 illustrated in Figure 1 are not provided as illustrated in Figure 5. In this example, the projecting portion 15 is caused to further project than the upper surface (second side surface). It is preferable to provide steps or dented portion in a vehicle member, which is not seen in the drawing, such that the step or the dented portion is disposed on the side closer to the center in the table width direction than the projecting portion 15 or such that the step or the dented portion does not interfere with the projecting portion 15. Furthermore, the projecting portion 15 is caused to project further upward than the center in the table width direction in the stored state, and the protruding portion 11 with the quadrangular prism shape ais provided at the distal end of the projecting portion 15. Note that the protruding portion 11 may be formed into substantially triangular shape as in the above example.

The projecting portion 15 is likely to receive a load acting on the projecting portion 15 by the entire table since the dented portions 13 illustrated in Figure 1 are not provided, and it is possible to stably support baggage. Furthermore, since the projecting portion 15 is caused to further project than the upper surface (second surface), it is possible to avoid an interference between the handle or a person's hand and the surface of the dented portion on the center side in the table width direction when the handle is hooked at the projecting portion 15, and it is easy to hook the handle at the inner portion of the projecting portion 15 in the table width direction.

Furthermore, since the protruding portion 11 is provided at the distal end of the projecting portion 15, it is possible to cause the handle to abut lower surface 11a or the inner surface 11b in the width direction of the protruding portion 11 in the stored state illustrated in Figure 5 and to reduce unintended detachment of the handle from the projecting portion 15.

### (Second modification)

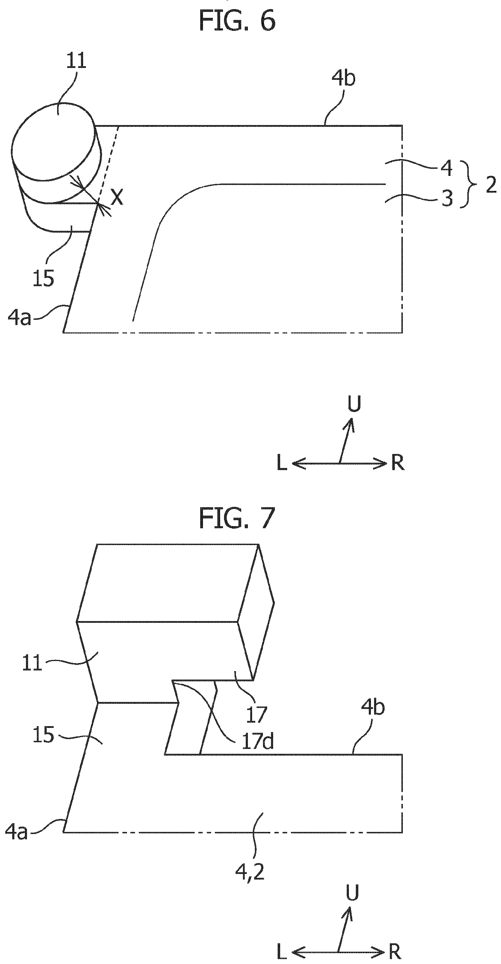

Next, the second modification will be described. As illustrated in Figure 6, the projecting portion 15 may be caused to project outward in the table width direction. In this example, protruding portion 11 with cylindrical shape is provided at the distal end of the projecting portion 15. The projecting portion 15 extends such that the protruding portion 11 are located further outward in the vehicle width direction than the outer surface 4a (first side surface). The outer surface of the protruding portion 11 in the table width direction and the outer surface of the distal end of the projecting portion 15 in the table width direction have the same curvature radius or similar curvature radii and are continuously formed in the table thickness direction.

Since the protruding portion 11 is located further outward in the vehicle width direction than the outer surface 4a, it is possible to restrict movement of the handle in the table width direction with the inner surface 11a of the protruding portion 11 in the table width direction and the outer surface 4a in Figure 6 when the handle is hooked at the protruding portion 11, and to stably support the baggage.

Furthermore, since at least inner surface 11a of the protruding portion 11 in the table width direction is formed to be located on the outer side in the front-rear direction from the inner side in the table width direction toward the outer side in the table width direction, a clearance is formed between the inner surface 11a in the table width direction and the outer surface 4a (the width X in Figure 6), and the handle is thus easily supported even if the handle is thick.

Additionally, since the protruding portion 11 is formed into the cylindrical shape, the handle is not locally deformed, and it is possible to bring the handle into contact with the inner surface 11a in the table width direction and to reduce degradation or the like of the handle. Note that if only the inner surface 11a of the protruding portion 11 in the table width direction is formed into arc shape (this may be an oval shape), the effect can be obtained, and the shape of the outer surface 11b of the protruding portion 11 in the table width direction can be appropriately changed.

Furthermore, in a case in which the turning shaft 7 is provided at the table edge portion 4 on the side in which the projecting portion 15 is provided, the projecting portion 15 projects in the axial direction of the turning shaft 7 that is a table width direction, a load acting on the projecting portion 15 is thus easily received by a vehicle member via the turning shaft 7, and it is thus possible to stably support the baggage.

Furthermore, since the amount of movement of the projecting portion 15 due to the turning decreases when the table is caused to turn between the stored state and the deployed state, it is possible to reduce by movement of the handle and to stably support the baggage, for example. For example, since the amount of movement of the projecting part at the time of turning is small, it is possible to reduce hooking of the projecting portion 15 at clothes or the like of the passenger at the time of turning, for example. Therefore, this is effective for and is easily applied to installation of the table 1 in a relatively small place.

### (Third modification)

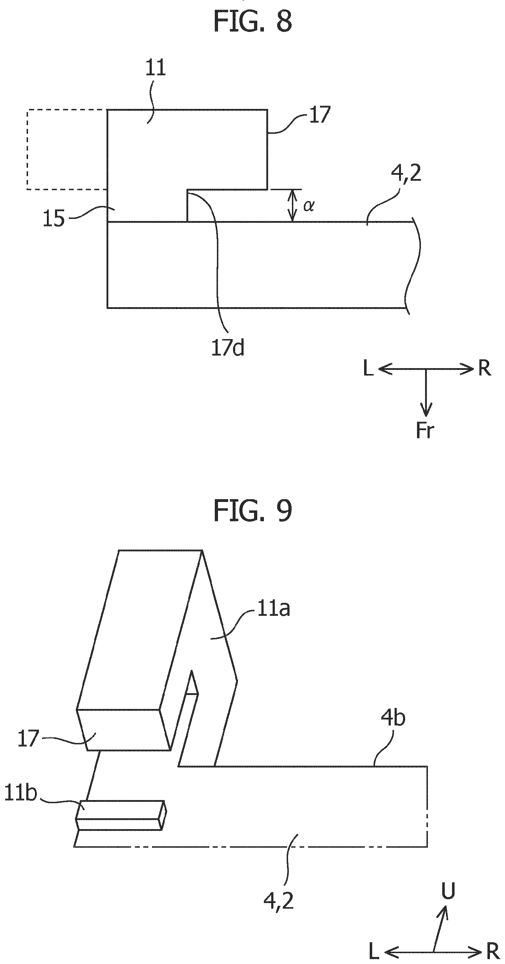

Next, the third modification will be described. As illustrated in Figures 7 and 8, the projecting portion 15 may be caused to project further upward than the center in the table width direction in the stored state, the protruding portion 11 may be provided at the distal end of the projecting portion 15, and furthermore, the expanding portion 17 expanding on the inner side of the protruding portion 11 in the table width direction may be provided. Here, if the handle is inserted into a clearance α between the expanding portion 17 and the table edge portion 4 as illustrated in Figure 8, it is possible to restrict movement in the up-down direction in the stored state or movement in the front-rear direction in the deployed state of the handle with the expanding portion 17 and the table edge portion 4, and as a result, it is possible to stably support the baggage.

In this example, it is possible to reduce detachment of the handle from the protruding portion 11 at the time of the turning of the table 1 even in a case in which the front end of the table 1 in the deployed state is turned upward and forward at the time of movement from the deployed state to the stored state. Furthermore, it is possible to cause the handle to abut the position of a root 17d of the expanding portion 17 and to reduce detachment of the handle when the table 1 is turned from the deployed state to the stored state. Note that the expanding portion 17 may be expanded outward in the table width direction as illustrated by the dashed line in Figure 8.

### (Fourth modification)

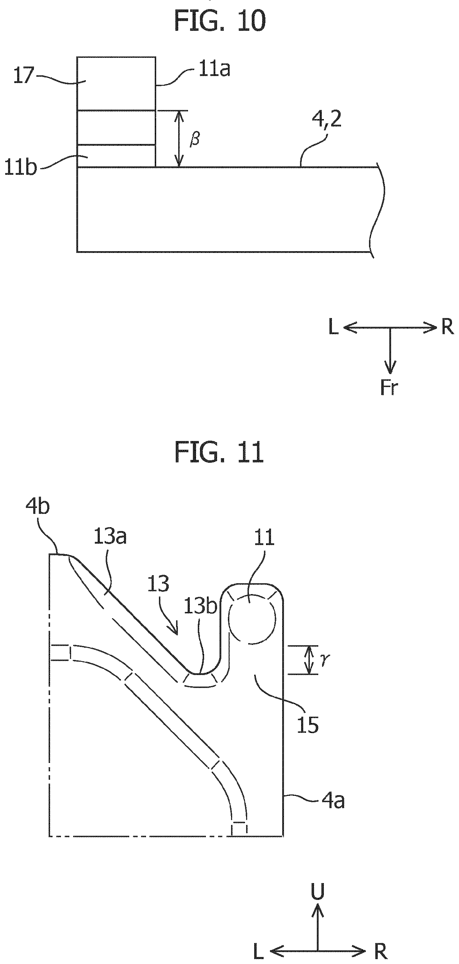

Next, the fourth modification will be described. As illustrated in Figures 9 and 10, the projecting portion 15 may be caused to project forward from the front end of the table 1 in the deployed state, first protruding portion 11a projecting upward may be provided at the front portion of the projecting portion 15, and the expanding portion 17 may be provided to expand backward from the upper end of the first protruding portion 11a. Furthermore, second protruding portion 11b may be provided at the table edge portion 4 located further backward than the rear end of the expanding portion 17 in the deployed state in this example.

In this example, it is possible to restrict movement of the handle in the front-rear direction in the deployed state with the expanding portion 17 and the table edge portion 4 by inserting the handle into a clearance β between the lower end of the expanding portion 17 and the table edge portion 4 as illustrated in Figure 10 in the deployed state, and to thereby stably support the baggage. Furthermore, the second protruding portion 11 can reduce detachment of the handle by the handle abutting the second protruding portion 11b when the table 1 is turned even at the time of the changing from the stored state to the deployed state.

Note that the first protruding portion 11a may not be provided with the expanding portion 17 as illustrated in Figure 5. Furthermore, the second protruding portion 11b may be disposed further inward in the table width direction than the first protruding portion 11a. In that case, the second protruding portion 11b may be formed longitudinally in both directions on the outer surface 4a (first side surface).

### (Fifth modification)

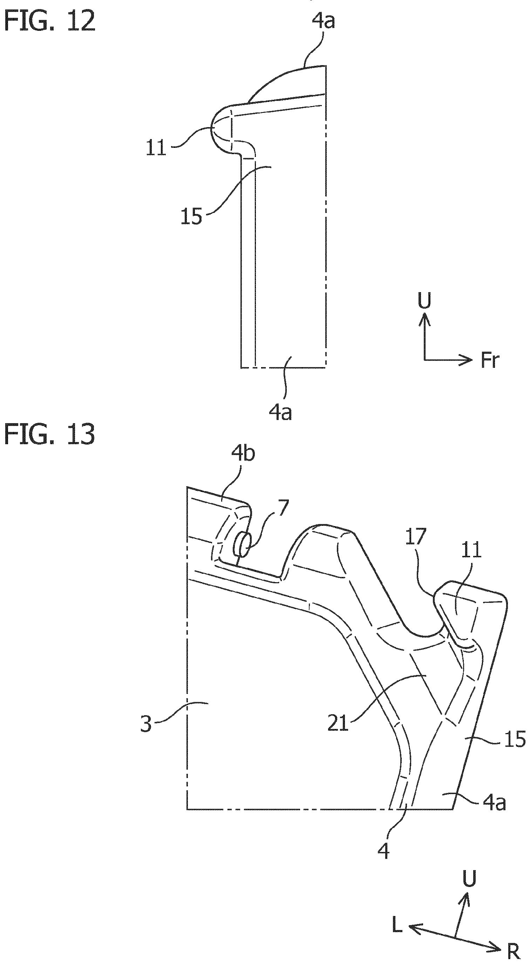

Next, the fifth modification will be described. As illustrated in Figures 11 and 12, the projecting portion 15 and the dented portion 13 may be provided as in the above embodiment, and furthermore, the protruding portion 11 may be formed into semispherical shape in the above embodiment. In this example, the expanding portions 17 are not provided.

Therefore, it is possible to set a large frontage dimension for the dented portion 13 located at an upper end of the dented portion 13 in the stored state and to easily insert the handle to the dented portion 13 when the handle is inserted in the depth direction of the dented portions 13.

Furthermore, since bottoms 13b of the dented portions 13 and the lower ends of the protruding portions 11 are disposed at an interval γ (Figure 11), it is possible to easily cause the handle to abut each of the dented portions 13 and the protruding portions 11 and to stably support the baggage.

### (Sixth modification)

Next, the sixth modification will be described. Inclined surface 21 that is inclined in a direction toward the back surface of the table 1 from the main surface 2 (table surface) of the table 1, as the inclined surface 21 approaches a distal end portion from a proximal end portion, may be formed at the projecting portion 15. Furthermore, the length in a direction intersecting the longitudinal direction of the projecting portion 15 at the proximal end portion (the width of the projecting portion 15) is preferably set to be longer than the length at the distal end portion.

For example, the inclined surface 21 is preferably provided on the surface of the projecting portion 15 corresponding to the main surface 2 as illustrated in Figures 13 to 15. The inclined surfaces 21 is inclined on the vehicle front side as the inclined surface 21 approaches the upper side in the stored state. In other words, the length of the projecting portion 15 in the table thickness direction gradually decreases as the projecting portion 15 approaches the distal end portion from the proximal end portion. Moreover, the width of the proximal end portion is set to be longer than the width of the distal end portion. The width of the proximal end portion in this example is the length in the inclination direction of the inclined portion 13a of the dented portion 13. It is possible to make it easy to hook the handle by providing such inclined surface 21 in this manner.

It is possible to cause the handle to slide (move) toward the protruding portion 11 along the inclined surface 21 on the side of the placement surface 3 when the handle is hooked at the projecting portion 15 or the protruding portion 11, and to thereby make it easy to hook the handle at the protruding portion 11. Since a force acts in the direction of the sliding as described above (the direction from the proximal end portion of the projecting portion 15 toward the protruding portion 11) due to the weight of the baggage, movement of the handle is restricted, and it is possible to stably support the baggage.

Furthermore, since the inclined surface 21 in this example has a diameter gradually increasing from the side of the distal end to the side of the proximal end portion of the projecting portion 15, it is possible to disperse the load of the baggage to the outer surface 4a (first side surface), the upper surface 4b (second side surface), and the placement surface 3 and to reduce oscillation and the like. Moreover, since the first side surface and the second side surface (the upper surface 4b and the outer surface 4a) are connected while being smoothly inclined by the inclined surface 21, the contact area between the handle and the outer circumferential surface (outer surface 4a) of the proximal end portion of the projecting portion 15 increases, and it is possible to stably support the baggage.

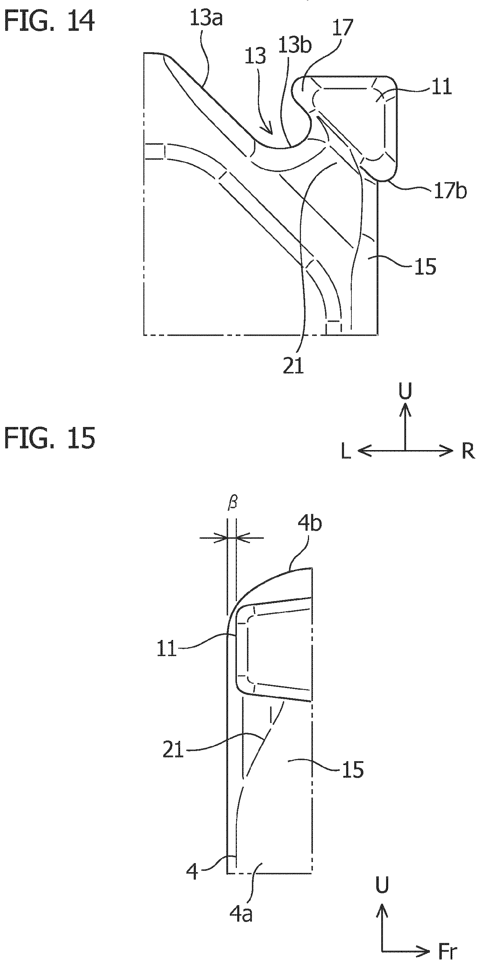

Furthermore, since the width of the bottom 13b of the dented portion 13 increases by providing the inclined portion 13a of the dented portion 13, it is easy to hook the handle. Moreover, the placement surface 3 and the distal end of the protruding portion 11 deviate from each other by the length β as illustrated in Figure 15. Therefore, it is possible to avoid contact between the passenger and the protruding portion 11. Note that β may be set to zero and the placement surface 3 and the distal end of the protruding portion 11 may be configured such that the position thereof is aligned.

In addition, it is possible to slide the handle along the inclined surface 21 when the handle is hooked at the projecting portion 15 or the protruding portion 11 along the inclined portion 13a of the dented portion 13. Therefore, since gravity acts in the sliding direction, and the handle moves toward the projecting portion 15 and stops at the projecting portion 15, movement of the handle is restricted, and it is possible to stably support the baggage. Furthermore, it is possible to disperse the load of the baggage from the bottom 13b to the placement surface 3, the outer surface 4a, or the upper surface 4b and to thereby reduce oscillation and the like.

Note that the protruding portion 11 the expanding portion 17b may be provided on both outer sides in the table width direction as illustrated by the dashed line. With such a configuration, it is possible to restrict movement of the handle with the expanding portion 17b in a case in which the deployed state is achieved through turning backward and downward and the protruding portion 11 is located on the side opposite to the turning shaft, in particular. In this case, it is possible to restrict the above movement without providing the expanding portions 17a.

### (Seventh modification)

Next, the seventh modification will be described. The length in the intersecting direction that intersects the longitudinal direction of the projecting portion 15 at the proximal end portion of the projecting portion 15 is set to be longer than that at the distal end portion, and the proximal end portion may be configured to extend toward the turning portion in the intersecting direction. Furthermore, inclined surface 22 that is inclined in the direction from the back surface of the table 1 toward the main surface 2 of the table 1 as the inclined surface 22 approaches the distal end portion from the proximal end portion may be formed at the projecting portion 15.

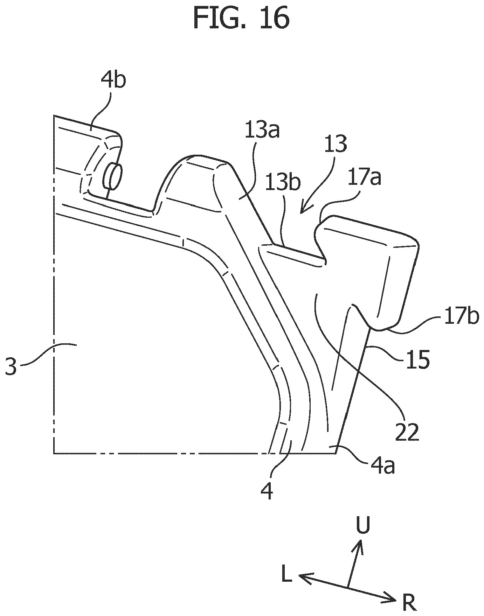

As illustrated in Figures 16 to 18, for example, the bottom 13b of the dented portion 13 extends outward in the table width direction from the intermediate portion of the inclined portion 13a in the inclination direction. Moreover, the projecting portion 15 extends upward in the stored state from the outer surface 4a. The upper end of the projecting portion 15 is disposed below the upper surface 4b in the stored state. Additionally, the proximal end portion of the projecting portion 15 extends in the inclination direction of the inclined portion 13a of the dented portion 13 and extends in the direction toward the turning shaft 7. Furthermore, the upper end of the projecting portion 15 is provided with expanding portions 17a and 17b. For example, the inner expanding portion 17a is inclined outward in the table width direction as the expanding portion 17a approaches the lower end from the upper end. Furthermore, the outer expanding portion 17b is preferably inclined upward as the expanding portion 17b approaches the outer surface 4a from the lower end.

Furthermore, the inclined surface 22 that is inclined on the vehicle rear side toward the upper side in the stored state is provided at the projecting portion 15 on the side of the placement surface 3. In this example, upper portion of the inclined surface 22 functions as the protruding portion 11. Additionally, the proximal end portion of the projecting portion 15 extends in the inclination direction of the inclined portion 13a of the dented portion 13 and extends in the direction toward the turning shaft 7.

With such a configuration, it becomes easy to secure a space in which the handle can be disposed on the upper surface of the protruding portion 11, and it is thus possible to stably support even a thick handle. Furthermore, since the inner expanding portion 17a is inclined as described above, the handle is unlikely to detached, and it is possible to stably support the handle. Furthermore, since the proximal end portion of the projecting portion 15 is thick, it is possible to easily receive the load acting on the handle by dispersing it.

Furthermore, it is possible to restrict movement of the handle with the expanding portion 17b in a case in which the deployed state is achieved by turning backward and downward and the protruding portion 11 is located on the side opposite to the turning shaft, by providing the outer expanding portion 17b. In this case, it is possible to restrict the above movement without providing the expanding portion 17a. Furthermore, either the inner expanding portion 17a or the outer expanding portion 17b may be provided.

Furthermore, since the bottom 13b of the dented portion 13 is a horizontal surface in the stored state, it is possible to reduce deformation of the handle even in a case of a wide strip-shaped handle and to reduce occurrence of wrinkles and the like in the handle. For example, it is possible to reduce deformation of the handle formed into a strip shape with a predetermined width and to reduce occurrence of wrinkles in the handle.

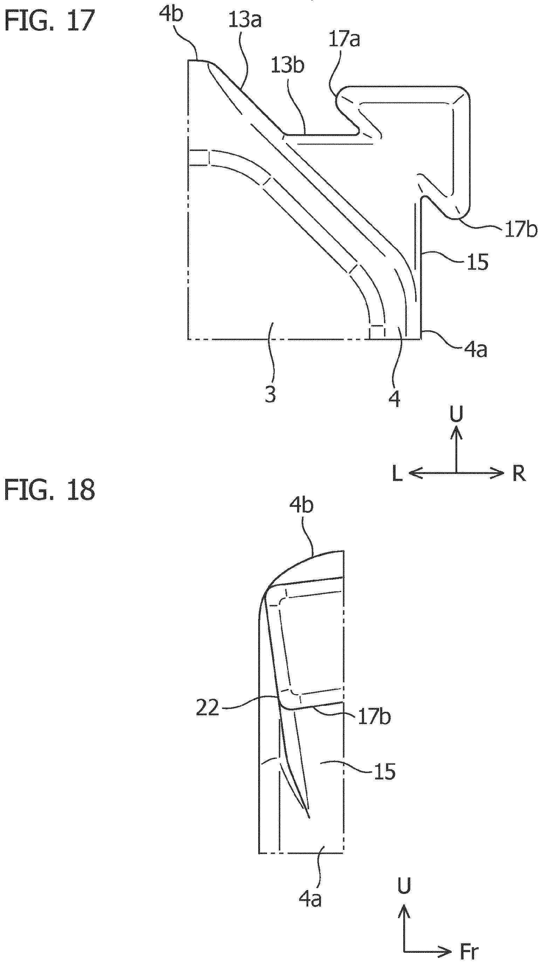

As illustrated in Figure 18, the inclined surface 22 that is inclined on the vehicle rear side toward the upper side in the stored state is provided at the projecting portion 15 on the side of the placement surface 3. In other words, the inclined surface 22 is inclined to be higher toward the distal end of the projecting portion 15 in the deployed state. It is possible to make the handle unlikely to detached from the projecting portion 15 by providing the inclined surface 22 in this manner. Note that part corresponding to the inclined surface 22 may be formed to be flat in the deployed state.

### (Eighth modification)

Next, the eighth modification will be described. The projecting portion may be provided on side surfaces of the table and project outward from the center of the table surface. Furthermore, the projecting portion may include the distal end portion and the proximal end portion that are close to the side surface, the length in the direction intersecting the longitudinal direction of the projecting portion at the distal end portion may be set to be longer than that at the proximal end portion, and the inclined surface 22 that is inclined in the direction from the rear surface of the table toward the placement surface 3 (table surface) from the proximal end portion toward the distal end portion may be formed at the projecting portion.

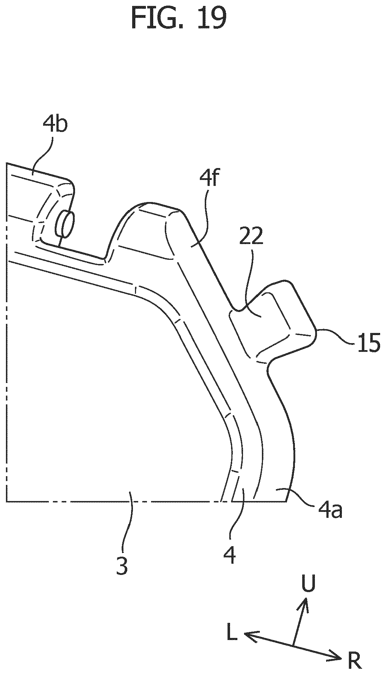

In the eighth modification, for example, inclined side surface 4f is formed at corner configured by the upper surface 4b and the outer surface 4a as illustrated in Figures 19 to 21. The inclined side surface 4f is formed such that the corner portion of the table 1 is chamfered, and is inclined downward as the inclined side surface 4f approaches the outer side in the table width direction in the stored state. The projecting portion 15 in this example is provided at an intermediate portion of the inclined side surface 4f in the inclination direction and projects in the direction perpendicularly intersecting the inclination direction from the inclined side surface 4f. The width of the distal end portion of the projecting portion 15 in the inclination direction is set to be longer than the width of the proximal end portion of the projecting portion 15 in the inclination direction. The inclined surface 22 is provided at the projecting portion 15 on the side of the placement surface 3 (the surface facing the vehicle rear side in the stored state). The inclined surface 22 is inclined in the direction from the back surface of the table 1 toward the placement surface 3 as the inclined surface 22 approaches the distal end portion from the proximal end portion. The inclined surface 22 is inclined on the vehicle rear side toward the distal end portion in the stored state.

Providing a tapered portion including the inclined side surface 4f at the corner portion of the table edge portion 4 and providing the projecting portion 15 at the tapered portion make the baggage unlikely to come into contact in the table width direction, and it is possible to make it easy to hook the handle.

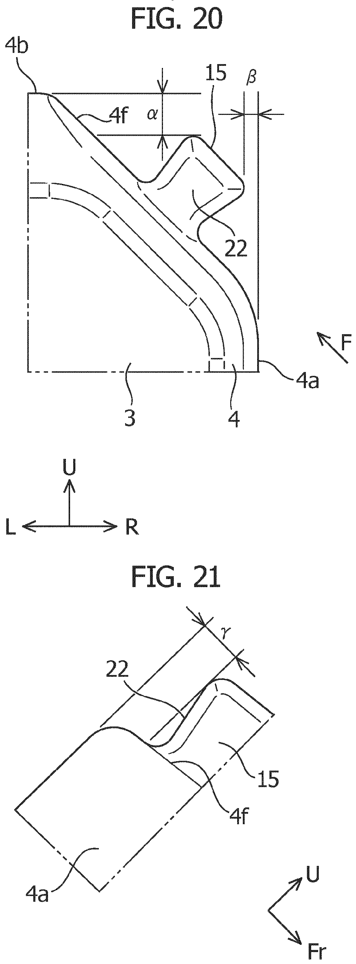

Furthermore, there is a distance α between the upper end of the projecting portion 15 and the upper surface 4b in the up-down direction in the stored state as illustrated in Figure 20 in this example. There is a distance β between outer end of the projecting portion 15 in the table width direction and the outer surface 4a. There is a distance γ between front end of the projecting portion 15 in the vehicle front-rear direction (table thickness direction) in the stored state and the table edge portion 4 on the side of the placement surface 3. It is possible to make it easy to hook the handle by having the distance α and the distance β.

Furthermore, it is possible to shorten the projecting portion 15 as compared with a case in which the inclined surface 22 is not included. Furthermore, it is possible to increase the contact area between the handle and the projecting portion 15 in the deployed state with the inclined surface 22 and to stably support the baggage. Furthermore, since the distal end of the inclined surface 22 is located higher than the proximal end portion in both the stored state and the deployed state in this example, the handle is unlikely to be detached from the projecting portion 15.

Furthermore, since the distance γ is included, it is possible to increase the contact area between the side surface (the inclined side surface 4f in this example) of the table edge portion 4 and the handle in the stored state and to stably support the baggage. Furthermore, even a thick handle is easily hooked at the projecting portion 15. Furthermore, since the width of the proximal end portion and the distal end portion is set as described above, the handle is unlikely to be detached.

Although the distal end portion extends on both sides in the direction intersecting the longitudinal direction of the projecting portion with respect to the proximal end portion in the eighth modification, the distal end portion may be formed to extends only on one side in the longitudinal direction of the projecting portion 15 with respect to the proximal end portion.

### (Ninth modification)

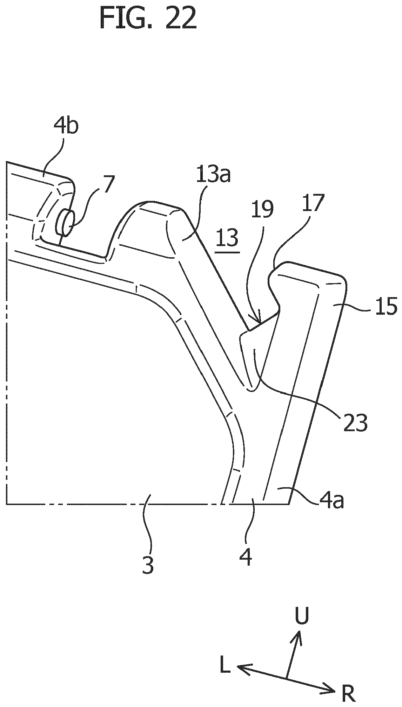

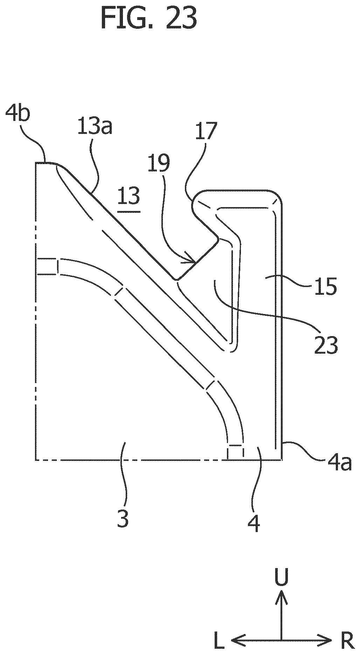

Next, the ninth modification will be described. As illustrated in Figures 22 and 23, coupling portion 19 that couples the projecting portion 15 with the inclined portion 13a of the dented portion 13 may be provided. The coupling portion 19 couples the intermediate portion of the inclined portion 13a in the inclination direction and the end portion of the expanding portion 17 in the table outer direction. It is possible to enhance support rigidity of the projecting portion 15 by providing the coupling portion 19. Furthermore, since the coupling portion 19 is connected to the expanding portion 17, it is also possible to enhance support rigidity of the expanding portion 17.

The coupling portion 19 forms the bottom portion of the dented portion 13 and is disposed further downward than the upper end of the table edge portion 4 in the deployed state. In other words, the coupling portion 19 is brought into a state in which the coupling portion 19 is further dented as compared with the projecting portion 15 and the table edge portion 4 in the deployed state. In this manner, it is possible to cause the handle to bend by the amount corresponding to the dent and to easily detach the handle from the dented portion 13. In the stored state, inclined surface 23 that is inclined on the side of the back surface of the table 1 as the inclined surface 23 approaches the upper side from the proximal end portion of the projecting portion 15 is formed at the coupling portion 19 on the side of the placement surface 3. The inclined surface 23 makes the handle unlikely to move in the front-rear direction when the baggage is hooked at the projecting portion 15. Moreover, it is also possible to receive a load acting on the hooking part on the side of the distal end of the projecting portion 15 as well.

### [Reference Signs List]

- 1: Table
- 2: Main surface
- 3: Placement surface
- 3a: Groove portion
- 3b: Opening
- 3c: End portion
- 3d: First rib
- 3e: Second rib
- 3f: Third rib
- 4: Table edge portion
- 4a: Outer surface (first side surface)
- 4b: Upper surface (second side surface)
- 4c: Lower surface
- 4f: Inclined side surface
- 7: Turning shaft
- 9: Rear surface of seat back
- 11: Protruding portion
- 11a: First protruding portion
- 11b: Second protruding portion
- 13: Dented portion
- 13a: Inclined portion
- 13b: Bottom
- 15: Projecting portion
- 17: Expanding portion
- 17d: Root
- 19: Coupling portion
- 21: Inclined surface
- 22: Inclined surface
- 23: Inclined surface

## Claims

1. A table structure for a transport, including a table that is rotatably supported by a fixation member of a transport, **characterized in that**:
the table includes a plurality of side surfaces including a first side surface and a second side surface;
a corner portion is formed by the first side surface and the second side surface, and
the corner portion includes a projecting portion that projects from the second side surface in a longitudinal direction of the first side surface.

2. The table structure for a transport according to claim 1, wherein a side surface of the projecting portion is formed continuously from the first side surfaces.

3. The table structure for a transport according to claim 1 or 2, wherein the projecting portion includes, between a distal end portion and a proximal end portion that is close to the second side surface, an expanding portion that expands in a direction intersecting a longitudinal direction of the projecting portion.

4. The table structure for a transport according to claim 3, wherein
a dented space portion that is dented toward an inside of a plane of the table is formed in the second side surface, and
the projecting portion configures a side wall surface of the dented space portion.

5. The table structure for a transport according to claim 3, wherein a length of the proximal end portion in the direction intersecting the longitudinal direction of the projecting portion is longer than the length of the distal end portion.

6. The table structure for a transport according to claim 3, wherein
a turning portion is provided on the side surface of the table,
a length of the distal end portion in an intersecting direction intersecting the longitudinal direction of the projecting portion is set to be longer than a length of the distal end portion, and
the distal end portion extends toward the turning portion in the intersecting direction.

7. The table structure for a transport according to claim 5, wherein an inclined surface that is inclined in a direction toward a table surface from a rear surface of the table as the inclined surface approaches the distal end portion from the proximal end portion is formed in the projecting portion.

8. The table structure for a transport according to claim 5, wherein an inclined surface that is inclined in a direction toward a rear surface from a table surface of the table as the inclined surface approaches the distal end portion from the proximal end portion is formed in the projecting portion.

9. A table structure for a transport, including a table that is rotatably supported by a fixation member of a transport, **characterized in that**
a side surface of the table is provided with a projecting portion that projects outward from a center of a table surface;
the projecting portion includes a distal end portion and a proximal end portion that is close to the side surface;
a length of the distal end portion in a direction intersecting a longitudinal direction of the projecting portion is set to be longer than a length of the distal end portion; and
an inclined surface that is inclined in a direction toward a table surface from a rear surface of the table as the inclined surface approaches the distal end portion from the proximal end portion is formed in the projecting portion.
